(19) **Europäisches Patentamt / European Patent Office / Office européen des brevets**

(11) **EP 4 769 198 A1**

(12) # EUROPEAN PATENT APPLICATION

(43) Date of publication:
**01.07.2026 Bulletin 2026/27**

(21) Application number: **24223656.0**

(22) Date of filing: **30.12.2024**

(51) International Patent Classification (IPC):
**G06F 30/10** (2020.01)   **G06F 30/20** (2020.01)
**G06F 111/20** (2020.01)   **G06F 111/04** (2020.01)

(52) Cooperative Patent Classification (CPC):
**G06F 30/10; G06F 30/12; G06F 30/27;**
G06F 2111/04; G06F 2111/18; G06F 2111/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **CAE Tech Limited
Leamington Spa, Warwickshire CV32 4LY (GB)**

(72) Inventors:
• **HARMAN, Peter**
  **Leamington Spa, CV32 4LY (GB)**
• **PIE, Xènia**
  **Leamington Spa, CV32 4LY (GB)**

(74) Representative: **Sanger, Phillip Simon
GWIP Ltd t/a Grey Wolf IP
1 Mill Street
Leamington Spa, Warwickshire CV31 1ES (GB)**

(54) **COMPUTER IMPLEMENTED DESIGN METHOD FOR ASSEMBLIES**

(57) A computer implemented method of designing an assembly configuration of a plurality of interconnected modules, the method comprising the steps of:

for a plurality of physical modules each having at least one physical connector, providing module data (100) identifying the module and connector data;

forming a module-graph (200) comprising, for each module, a module node (1352) comprising the module data and at least one connector node (1354) comprising the connector data, and forming connection edges (1356) between compatible connector nodes of pairs of module nodes;

creating a module instance graph (MIG) (1370) representative of an assembly configuration of modules, the module instance graph comprising one or more module instances, each module instance relating to one of the plurality of modules;

querying the module-graph (300) by:

generating a next module option by identifying available modules based on the connection edges in the module-graph;

selecting a module for addition to the module instance graph from the available modules;

adding a module instance to the module instance graph based on the selected module;

repeating the steps of generating, selecting and adding to generate a completed module instance graph; and,

generating an assembly configuration (400) based on the completed module instance graph.

Fig. 1

EP 4 769 198 A1

## Description

## Technical Field

The present application is concerned with a computer implemented design method for assemblies. More specifically the present invention is concerned with a computer implemented method of producing one or more alternative assembly configurations of modules based on a predetermined set of criteria.

## Background Art

There are many technical fields in which it is useful to build assemblies from modules. In electronic device design, it is useful to be able to select a plurality of individual electronic components (the modules) and connected them together to produce an electronic device (the assembly) which is useful for carrying out a task. For example, an electronic device for controlling a piece of hardware, or a computer requiring a specific CPU, GPU, memory, storage etc for a specific computing task.

Such a requirement also exists in non-electronic fields such as interior design. Kitchens, for example, are typically assemblies of modules (appliances, cupboards and so on) that must fit within a predetermined space, and perform specific functions depending on end user requirements.

A problem with modular design is that generating assembly configurations (a configuration being a representation of a specific assembly of modules) can quickly become a complex task. There are many rules and criteria to contend with- modules can only be connected to each other if they share compatible connectors. Modules may clash in three dimensional space. They may also have functional incompatibilities- particularly electronic modules. As the number of modules increases, it is impossible to visualise all of the ways in which they can be connected. Because the human mind is not capable of storing many objects, and details of their compatibility with each other the number of final designs (assemblies) that a human mind can generate is severely limited. If the rules and criteria are numerous- which they are in many such fields- then the task is even more daunting.

It is possible to create assembly configurations in a virtual environment, using e.g. 3D CAD models, but such models are limited to the user's ability to manipulate and assemble the modules in a compatible manner.

It is an aim of the present invention to overcome, or at least mitigate, the aforementioned problems.

## Summary of Invention

According to a first aspect of the present invention there is provided a computer implemented method of designing an assembly configuration of a plurality of interconnected modules, the method comprising the steps of:

for a plurality of physical modules each having at least one physical connector, providing module data identifying the module and connector data;

forming a module-graph comprising, for each module, a module node comprising the module data and connector nodes comprising the connector data, and forming connection edges between compatible connector nodes of pairs of module nodes;

querying the module-graph by:

creating a module instance graph (MIG) representative of an assembly configuration of modules, the module instance graph comprising one or more module instances, each module instance relating to one of the plurality of modules;

generating a next module option by identifying available modules based on the connection edges in the module-graph;

selecting a module for addition to the module instance graph from the available modules;

adding a module instance to the module instance graph based on the selected module;

repeating the steps of generating, selecting and adding to generate a completed module instance graph; and,

generating an assembly configuration based on the completed module instance graph.

Preferably the module-graph does not comprise geometric models such as 3D models of the modules. The graph therefore only contains the data required to assess compatibility between modules. The module graph stores, primarily, the connections between modules and thus is small in size and quick to interrogate. Next module options can be generated quickly and easily, which provides for a technically efficient and fast way to generate module configurations.

Preferably the connector data comprises orientation data for each connector.

Preferably the method comprises the steps of:

providing geometric data for at least two modules in the module-graph;

checking for module collisions using the orientation data to undertake spatial transformations on the geometric data;

adding collision rules to the module graph, the collision rules identifying collisions between the at least two modules.

In this way, collisions can be added to the graph by using geometry (the geometry itself is not added to the graph).

Preferably modules in breach of a collision rule are excluded from the step of generating a next module option.

Preferably the method comprises the steps of: adding composition rule data to the module graph, composition rule data comprising upper and / or lower limits of the number of any module permitted in an assembly configuration.

Preferably modules in breach of a composition rule are excluded from the step of generating a next module option.

Preferably the method comprises the steps of: adding direct rules to the module graph, the direct rules comprising data concerning the compatibility of two modules if directly connected.

Preferably modules in breach of a direct rule are excluded from the step of generating a next module option.

Preferably the method comprises the steps of:

generating an initial population of assembly configurations using the method above;

providing a set of criteria;

assessing the population against the criteria and selecting assembly configurations that meet, or are closest to meeting, the criteria;

modifying the selected assembly configurations;

repeating the above steps to iterate towards a population of assembly configurations that meet the criteria.

Preferably the method comprises the step of of modifying comprises the step of mutating the selected assembly configurations by undertaking at least one of the functions of:

rearranging the modules in the module instance graph representing the assembly configuration;

removing a module from the module instance graph;

replacing a module from the module instance graph;

adding a module to the module instance graph; and,

altering the parameters of a module in the module instance graph.

Preferably the step of mutation is carried out by randomly selecting at least one function.

Preferably the step of mutating comprises the step of verifying the mutation with respect to the module-graph.

The invention also provided a method of manufacture of an assembly comprising the steps of:

carrying out a computer implemented method according to the first aspect;

assembling the modules according to the assembly configuration.

The invention also provides a data processing apparatus comprising means for carrying out the method of the first aspect.

The invention also provides a computer program comprising instructions which, when the program is executed by a computer, cause the computer to carry out the method of the first aspect.

The invention also provides a computer-readable storage medium comprising instructions which, when executed by a computer, cause the computer to carry out the method of the first aspect.

**Brief Description of Drawings**

An embodiment of the present invention will now be described with reference to the following figure in which:

FIGURE 1 is a method according to the present invention;
FIGURE 2 is a perspective view of a module;
FIGURE 3 is a schematic view of a computer;
FIGURE 4 is a first module-graph;
FIGURE 5 is a second module-graph;
FIGURE 6 is a third module-graph;
FIGURE 7 is a module instance graph (MIG);
FIGURE 8 is a detailed view of one of the steps of the method of Figure 1;
FIGURE 9 is a module entropy graph (MEG);
FIGURE 10 is a schematic of a generative algorithm according to the invention;
FIGURE 11 is a detailed schematic view of a part of the algorithm of Figure 10;
FIGUREs 12a and 12b are detailed schematic views of a part of the algorithm of Figure 10.

**Specific description**

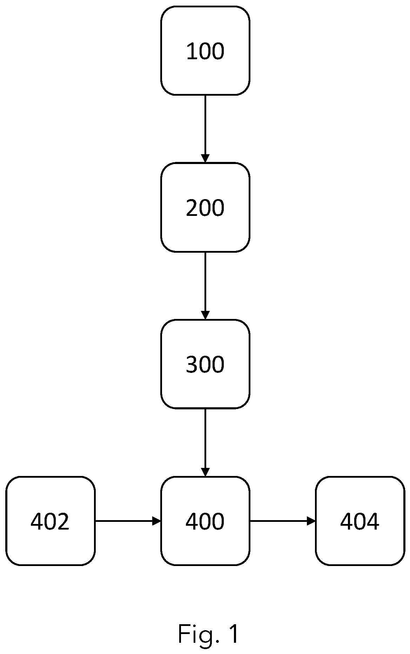

Figures 1 to 12b show a method in accordance with the present invention.

Figure 1 shows a method 100 according to the present invention. The method 100 comprises the following steps:

- A data input step 100;

- A graph creation step 200;

- A graph query step 300;

- An assembly step 400 which receives the results from the query step 300, a plurality of virtual and / or physical modules 402 and produces an assembly of modules 404.

It will be understood that the present invention is a method for creating assembly configurations comprising a plurality of modules. Modules are components or subassemblies which can be connected to other modules via connectors to create assemblies. The present invention can be used to create assembly configurations and therefore assemblies (by following the configuration) in various technical fields, including but not limited to electronic devices such as computers, and modular furniture assemblies such as those found in kitchens.

*Data input step 100*

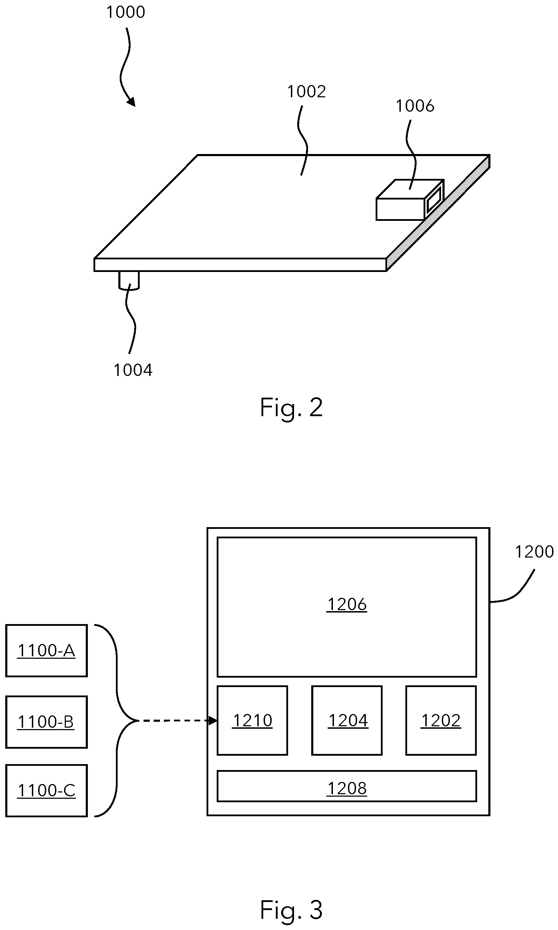

At step 100, a provider (who may be e.g. a manufacturer) provides a plurality of module designs. Figure 2 shows an example of a module 100. In this example, the module 1000 is a circuit board having a body 1002, a first connector 1004 and a second connector 1006. The body 1002 comprises a PCB and one or more microchip(s) configured to carry out a predetermined function (e.g. a memory of a computer). The first connector 1004 is a physical only connector- in this instance a male peg. The second connector 1006 is a combined physical / electronic connector in the form of a female USB-A port.
The module 1000 (and other modules of different configurations, but each having at least one connector) can be described with a virtual model 1100. The virtual model 1100 contains data about the size, shape and configuration of the module 1000 and in this embodiment is a three-dimensional computer aided design model (3D CAD model). It is therefore a three-dimensional representation of the module 1000 in virtual space (model space).
The provider uploads a plurality of models 1100-A, 1100-B, 1100-C etc. to a computer 1200. The computer 1200 is shown in Figure 3 and is a general purpose computer having a memory 1202, processor 1204, screen 1206, input device 1208 and storage 1210. The computer 1200 is configured to execute software for carrying out the method described below. The virtual models 1100-A etc have a module ID and each comprise physical information about respective modules 1000-A, 1000-B, 1000-C etc.
In addition, connector data is provided to the computer 1200. The connector data may be provided with the models 1100 or may be input subsequently. In one embodiment, connector data may be derived automatically from the model (for example a machine learning agent may learn to identify connectors from CAD). Connector information comprises:

- Connector edge data - comprising the three dimensional location of the connector on the module 1000; and,

- Connector node data - this includes several fields including:

    ○ a connector type (for example USB, round peg, etc);

    ○ a connector gender (male / female);

    ○ connector vectors, in this embodiment two vectors.

       ■ An alignment vector provides a direction for mating engagement, wherein when two such vectors are opposed, two mating connectors can connect; and,

       ■ An orientation vector, which provides a required alignment for connection. The orientation vector may not be required (a round peg in a round hole), more than one may be provided (e.g. USB-C) or only one may be provided (USB-A).

In addition, further metadata is provided about each module:

- Composition rules - includes how many of the specific module may be included in any one assembly. This may be one, two or any number. For example "0:n" is a rule for any number ( $n \in \mathbb{Z}$ ). "2:3" represents that only two or three such modules may appear in an assembly.

- Category data - this is a label describing the type of module.

- Parameter data - what parameters may be selected for the module. One parameter may be, for example, colour. Another may be a dimension or size. Another (for electronic components) may be frequency.

*Graph creation step 200*

Once step 100 is complete, the computer 1200 is used to iterate pairs of connectors to build a module-graph 1300. By this, we mean the software checks for compatibility between every pair of connectors. For example, a male-female pair may be compatible, but a male-male pair will not be (gender compatibility). A USB-C to USB-C connection will be compatible, but a USB-A to USB-C pair will not be (type compatibility).

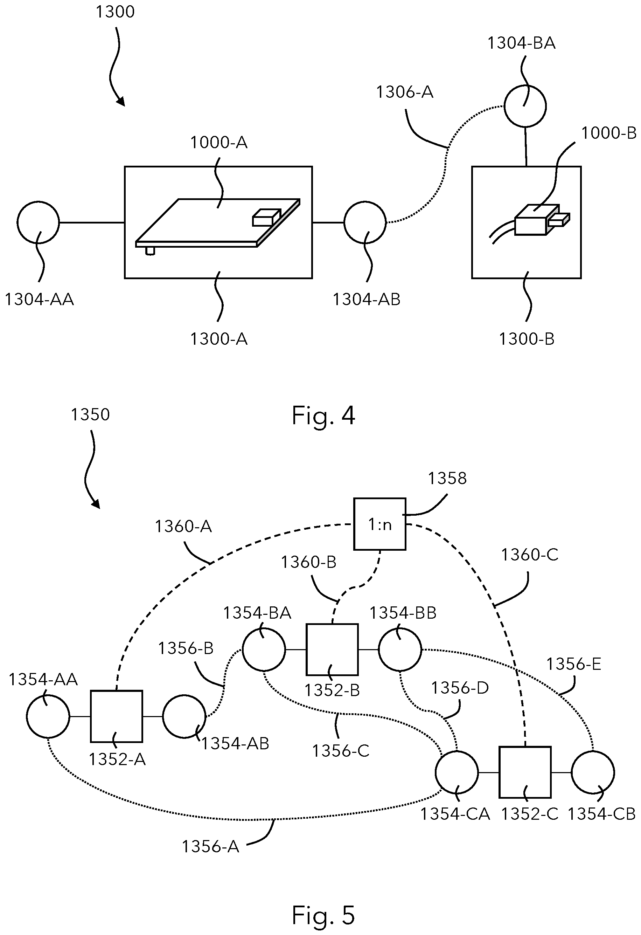

The module-graph 1300 is visualised in Figure 4 for ease of understanding, but it will be understood that the module-graph 1300 is not necessarily stored or displayed in this graphical form. Essentially, it is a database.

The module-graph 1300 comprises a plurality of module nodes 1302-A, 1302-B. Each module node represents a module 1000-A, 1000-B. The module nodes comprise the module ID (and associated metadata), but not the full geometric model. Each module node 1302-A, 1302-B is connected to at least one connector node 1304. In this example, the module node 1302-A is connected to connector nodes 1304-AA and 1304-AB. The module node 1302-B is connected to connector node 1304-BA. Within the module-graph 1300, only one node per module is provided. It represents the *possible* connection between modules, rather than a specific configuration.

By iterating across the input data, the computer 1200 is used to form as many connection edges 1306 as possible between connector nodes 1304 of different module nodes 1302. By way of example, the connection edge 1306-A in Figure 4 represents a possible connection between the connector node 1304-AB (female USB port 1006) and a male USB cable connector node 1304-BA.

The following description explains how further data is added to the module-graph. Each section of the description is provided with reference to a separate graph figure, but it will be understood that these rules are applied to the same graph in reality (a graph with many such rules applied cannot be graphically represented clearly, although it will be understood that it is well within the abilities of the computer 1200 to construct such complex graphs).

Another example of a module-graph 1350 is shown in Figure 5. Three module nodes 1352-A, 1352-B and 1352-C are shown. Each has connector nodes 1354 as follows:

- Module node 1352-A has connector nodes 1354-AA, 1354-AB;

- Module node 1352-B has connector nodes 1354-BA, 1354-BB;

- Module node 1352-C has connector nodes 1354-CA, 1354-CB;

The software on the computer 1200 has iterated the possible connector pairs to establish the following connection edges:

- Connection edge 1356-A between connector node 1354-AA and 1354-CA;

- Connection edge 1356-B between connector node 1354-AB and 1354-BA;

- Connection edge 1356-C between connector node 1354-BA and 1354-CA;

- Connection edge 1356-D between connector node 1354-BB and 1354-CA;

- Connection edge 1356-E between connector node 1354-BB and 1354-CB.

The connection edges only exist between compatible connectors. So, for example, connector nodes 1354-AA and 1354-CB are incompatible (they may be, for example, USB-A and USB-C).

The software on the computer 1200 also applies the composition rules based on the composition data input as detailed above. Referring to Figure 5, a 1:n rule 1358 is relevant to each of module nodes 1352-A, 1352-B and 1352-C. This means there can be between 1 and n (where n = {2, 3,...} of each modules in any given configuration. The rule 1358 is connected to each module node by composition edges 1360-A, 1360-B, 1360-C.

As well as the application of module metadata such as composition rules and parameters, the computer also generates and applies direct and indirect rules, which are explained below.

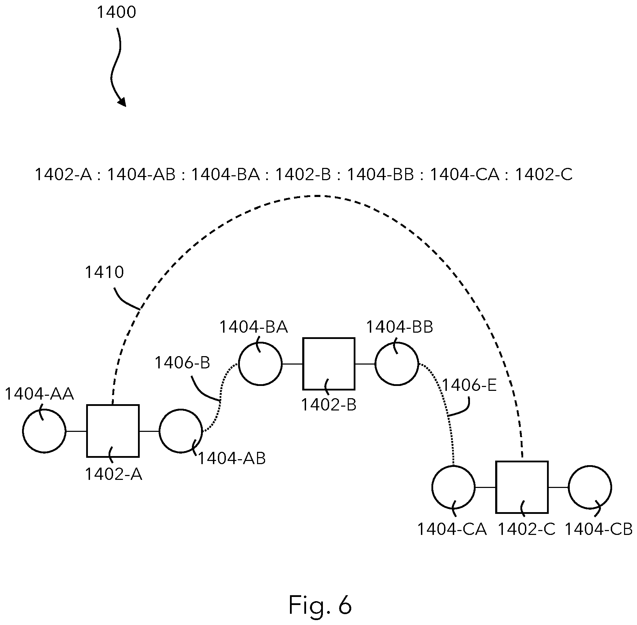

Another example of a module-graph 1400 is shown in Figure 6. This shows the generation and application of an indirect rule. Three module nodes 1402-A, 1402-B and 1402-C are shown. Each has connector nodes 1404 as follows:

- Module node 1402-A has connector nodes 1404-AA, 1404-AB;

- Module node 1402-B has connector nodes 1404-BA, 1404-BB;

- Module node 1402-C has connector nodes 1404-CA, 1404-CB;

An indirect edge 1410 is provided between the module nodes 1402-A and 1402-C. Because the module-graph contains the transformations required to manipulate the connected module geometry in three-dimensional space, collisions can be identified and added to the graph as edges such as the indirect collision edge 1410. In short, the indirect edge 1410 stores information on the paths between the two module nodes 1402-A and 1402-C that are incompatible. The graph is now aware that a connection between 1402-A and 1402-C via 1402-B (using the connectors shown) would result in a collision.

A pin mapping rule can be applied in the same way (if appropriate for the assembly in question).

As well as indirect rules as described above, direct rule edges are applied to the module-graph. For example, two modules may be directly connectable in terms of the connections, but may be incompatible for another reason. For example, two electronic modules may use the same serial bus, indicating incompatibility. There may be parameter incompatibility as well- for example a first module may only be connected to a second if the parameters are compatible - module size is a good example of this. Direct rules are also represented by edges between modules.

The complete module graph therefore comprises:

- One module node per module, the module node comprising module ID and associated module data (although not the full model of the module);

- One or more connection node(s) per module;

- Connection edges between compatible connection nodes;

- Direct rules placing conditions on the direct connection between two module nodes;

- Indirect rules placing conditions on the indirect connection between two nodes.

*Graph query step 300*

Once the full module-graph has been created, as described above, it can be queried to generate assembly designs. In one example, a vendor may have a business supplying modules for customers to assemble. The generated graph can therefore be used as a "configurator"- customers can interact with the model via a suitable interface (such as a GUI) to generate assembly designs and create an order for the component modules.

In another example, the vendor may undertake the assembly step and supply an assembly to the customer.

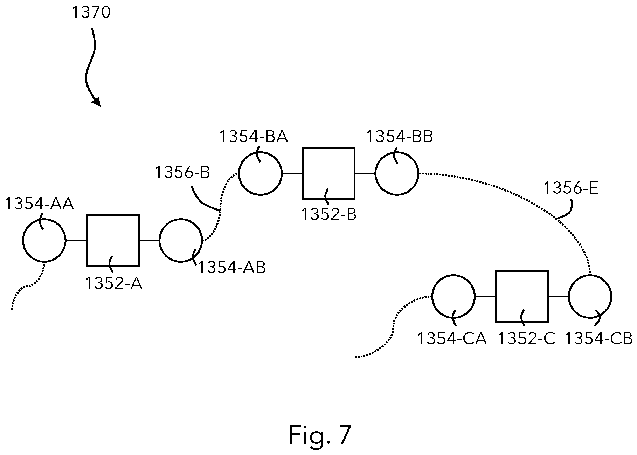

Specific assembly configurations are represented by a module instance graph (MIG), which is constructed from the (generic) module-graph generated as described above. Whereas the module-graph describes all possible connections between modules, the MIG describes a specific assembly configuration. An example MIG 1370 is shown in Figure 7, based on the module-graph 1350 of Figure 5. As can be clearly seen, two connector nodes 1354-AA and 1354-CA are unconnected, and therefore have the potential to be connected to further modules to grow the assembly represented by the MIG.

The module instance graph (MIG) is expanded using MODULEOPTIONS. In order to query the model, the concept of a MODULEOPTION needs to be understood. A MODULEOPTION represents a single instance of a module within an assembly. It comprises the data:

- The identity of a module (module ID);

- An instance number (the first module of this type is 0, the second 1 and so on);

- The parameter values for the module instance;

- An array of connections to existing modules, each defined as:

    ◦ Source module, instance number, connector ID;
    ◦ Target module, instance number, connector ID.

MODULEOPTIONs describe the next module instance to be added to the MIG. The user (or automated algorithm) needs to understand, what possible MODULEOPTIONs *could* be chosen next. The module-graph can be queried to determine this. In Figure 7, direct connection MODULEOPTIONs would be available for connection to nodes 1354-AA and 1354-CA.

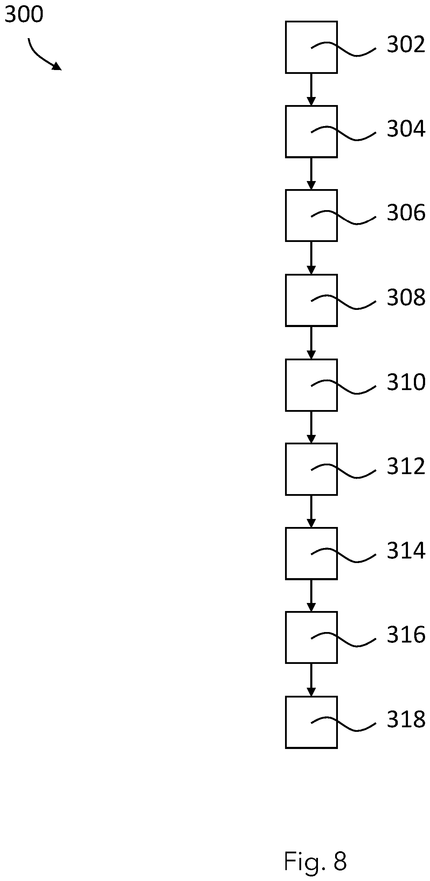

Referring to Figure 8, at step 302 a MIG is initialised. The user needs to understand that the MODULEOPTIONs are, in order to determine which modules are available to be added to the MIG next.

At step 304, MODULEOPTIONs are created for each module. If the current MIG is empty, there is one MODULEOPTION for each available module, and the instance number is 0. There are no connections. If the current MIG is populated, the available MODULEOPTIONs will be limited as follows.

At step 306, the direct rules and composition rules are applied. For example, it may be the case that module 1352-A cannot be connected to e.g. 1352-D (not shown) via 1354-AA because of an incompatibility, which may be functional or e.g. a parameter incompatibility. It may also be the case that 1352-A cannot be connected to another module of the same type because the composition rules specify that the maximum number of such modules has been reached in that MIG. This will narrow down the possible number of MODULEOPTIONs. This results in a narrowed list of available modules.

At step 308, the MIG is used to determine the available connectors for *direct* connection. This is a map for each module of each connector and which instance number MODULEOPTIONs have that connector free. In the example of Figure 7, connector nodes 1354-AA and 1354-CA are free for connection. Therefore, only MODULEOPTIONs having connectors which may be connected to these connection nodes can be selected (directly connectable MODULEOPTIONs).

In addition, it will be understood that further modules may be connected *indirectly* to the assembly represented by the MIG 1370. Indirect connection occurs via an intermediate module which may not be in the MIG yet. Evidently, in any reasonable sized model, there are many MODULEOPTIONs that may connected indirectly, and in order to speed up this analysis, at step 310 a maximum entropy graph (MEG) is created. The MEG is built from the module-graph for accelerated query of connectivity.

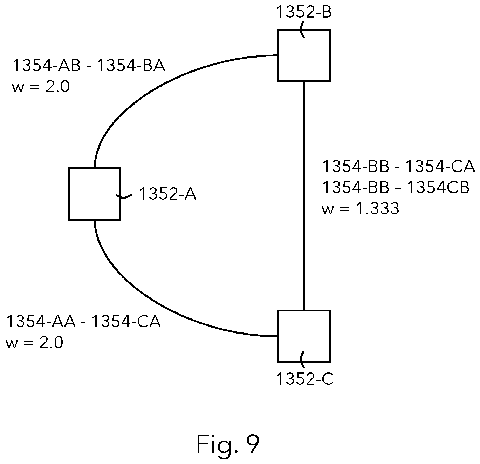

Figure 9 shows the maximum entropy graph of the module-graph 1350 of Figure 5. Each module is represented by a vertex (here labelled per nodes, 1352-A etc), and is linked to each of the other module vertices by a single edge. Each edge has a weight w calculated as follows:

$$w = 1.0 + \frac{1.0}{n}$$

Where n is the number of ways of connecting the vertices (modules). As can be seen in Figure 8, module 1352-A can be connected to the others by a single path each as listed in Figure 9. The module 1352-B and 1352-C can be connected in three ways, and as such w=1.333. The weight is therefore a representation of the paths that have the most available options- the closer the weight to 1, the more options for connections there are.

At step 312, for each connectable module in the MIG, the shortest path from that module to each other available module can be determined using Dijkstras shortest path algorithm. Because of how w is calculated, the shortest path is the one with the most possible connections.

At step 314, the connection paths are expanded using the module-graph, excluding any where intermediate modules are not valid MODULEOPTIONs (because they have been excluded already). This provides a further set of (indirectly connectable) MODULEOPTIONs.

At step 316, the connectable MODULEOPTIONs are checked against the indirect rules in the module-graph.

At step 318, the final set of connectable MODULEOPTIONs is provided to the user, who can select one for addition to the MIG.

*Partitioned models*

It will be noted that it is possible to create a partially connected MIG. For example, in the above description, an indirectly connectable MODULEOPTION may be selected. In this instance, the MIG is partitioned prior to the application of the direct rules and composition rules. Each MIG partition is treated separately, until the list of connectable modules is determined for each partition. Each partition has a set of connectable modules- and in order to provide the MODULEOPTIONs to the user, a further operation to determine the intersection of those sets is carried out.

*Assembly step 400*

Once the MIG is complete, the user has created an assembly. It will be noted that the MODULEOPTIONs and MIG do not use the detailed computer models of each module-for example the CAD. Module nodes in the module-graph, MIG, and MEG only carry metadata concerning that module. Once the MIG is completed, the user can then apply it to the detailed computer models, applying the requisite translations from the adjacent connector nodes and edges to create a detailed computer (CAD) model of the assembly represented by the MIG.

Furthermore, the MIG and / or CAD model may be used to generate instructions for assembly of the modules to create the assembly. As a result, the embodiment described herein is used to generate a physical assembly of modular components.

**Variations**

*Canonicalization of configurations*

The above process can be accelerated when the MIG is identified as being identical to previously generated MIGs. In this case, the MODULEOPTIONs have already been calculated.

This is achieved by defining a canonical representation of a set of MODULEOPTIONs chosen within a MIG:

- Sort by module ID (alphanumeric); then,

- Sort by degree (number of connections); then

- Sort by name of first connector, number of parameters, parameter values; then,

- Using consistent ordering above renumber the instances 0...n and update all connections; then,

- Separate connections from modules and sort connections by source module ID / instance / connector (after canonicalizing connection sorting source / target).

The resulting data structure is consistent across identical MIGs, and can be used to generate a MIG hash to represent a specific assembly.

*Generative algorithm*

In another embodiment, a generative algorithm (generative modular design (GMD) algorithm) is provided that interrogates the module-graph to generate assembly configurations that meet predetermined criteria, and to optimise a score.

The GMD algorithm is configured to query the module-graph to assembly configurations that satisfy given criteria. It also optimises assembly configurations to a score. GMD is an evolutionary algorithm that operates on a population of assembly configurations. Each iteration is a generation.

An initial population is generated in one of several ways:

a) Starting with an empty assembly configuration MODULEOPTIONS are randomly selected until there are n. n is randomly selected to be between 1 and $n_{max}$. $n_{max}$ is determined by the user(i.e. the maximum number of modules in the configuration).

b) An assembly configuration can be selected at random from previously generated assembly configurations.

c) An existing assembly configuration can be mutated to create another. Mutation is explained below.

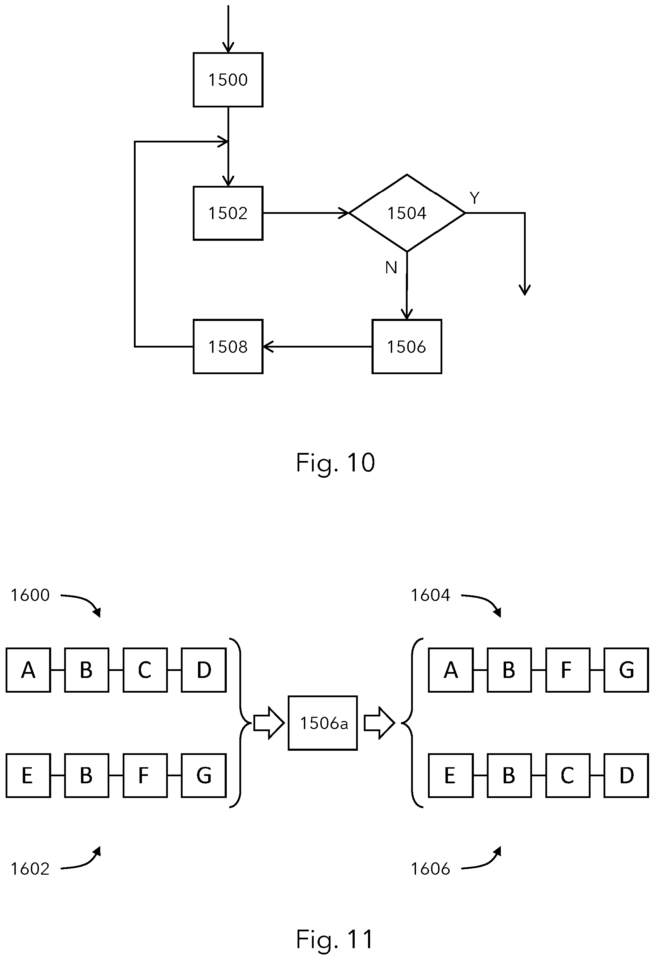

The GMD algorithm is shown in Figure 10. An initial population is generated as described above at step 1500. At step 1502 a fitness (scoring) function is applied. At step 1504 an assessment of whether the population meets the termination criteria is undertaken. If so, the final population is output at step 1504. If not, crossover and mutation operations are carried out at step 1506, a selection step is applied at step 1508 and the new generation is fed back into the fitness (scoring function) at step 1502. This process is repeated.

The fitness (scoring) function evaluates whether the assembly configurations of a population meet the requirements of the user, and how well. These requirements are assessed according to user criteria- being a set of individual criterion. Each criterion has a

CRITERION SCORE which is both a numerical value and a "satisfied" or "unsatisfied" status. Example criteria are:

- Bounds criterion - target physical dimensions for the assembly configuration (e.g. width, depth, height). The goal may be greater than, less than, equal to, etc. The score for the criterion is the sum of squares of the error in three dimensions.

- Count criterion - number of modules.

- Complete criterion - number below a minimum number of each module;

- Free connector criterion - number of unconnected connectors;

- Function criterion - essentially the number of unsatisfied functions of the assembly configuration;

- Parameter criterion - target value for certain parameters;

- Price criterion - cost of the assembly configuration;

- Template criterion - a group of functions and categories to be met;

- Weight criterion - weight of the assembly configuration.

The aim is to minimise the chosen criteria. As such a CONFIGURATION SCORE is generated at step 1 502, which is the sum of the (weighted) CRITERION SCORES from the criteria selected by the user. Note that criteria need to be satisfied (rather than unsatisfied) as well as minimised. The aim is to minimise and satisfy the individual CRITERION SCORES.

Moving on to step 1504, the termination criteria are as follows:

- Minimum generation - has the algorithm passed this number of iterations?;

- Maximum generation - set to prevent runaway;

- Steady fitness - if the CONFIGURATION SCORE has not changed by a predetermined degree in $A_{steady}$ generations, the process is stopped;

- Criteria satisfied - all CRITERION SCORES need to be satisfied.

As explained above, at step 1506 crossover and / or mutation occurs.

Crossover takes a pair of configurations from the input population and combines them to create a new pair. Referring to Figure 11, two configuration MIGs 1600, 1602 are shown from the input population. Each have four module nodes ABCD, EBFG respectively. The crossover operation at step 1506a recognises a shared module (B in this case). As such, it attempts to disconnect C and F and swap the disconnected assembly configuration halves to create new assembly configurations 1604 (ABFG), 1606 (EBCD).

Mutation modifies a single configuration. Mutation comprises a number of operations applied in sequence, each with a given probability of being applied:

- Remove - remove a module that does not result in a disconnected assembly (i.e. that only has one connection);

- Replace - replace on with another (compatible) module;

- Add - add a new module;

- Parameters - randomly permute parameter values within a predetermined range;

- Shuffle - rearrange in a different order;

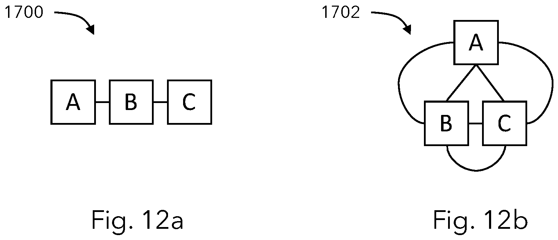

The shuffle operation randomly permutes a given set of modules in the assembly configuration. The MIG is used, and a subgraph of minimum three modules is selected. Referring to Figure 12a, a MIG subgraph 1700 is shown with connected modules ABC. In Figure 12b, a shuffle graph 1702 is created showing each way these three modules can be connected by way of connection edges. The edges in the shuffle graph 1702 are assigned random weights, and a minimum spanning tree (MST) algorithm is applied to select n-1 edges to reconnect the modules. The resulting configuration is tested for feasibility (applying the indirect rules referred to in the embodiment above). If the arrangement is not feasible, one edge is removed and the MST algorithm is run again until a feasible connection scheme is arrived at.

At step 1508, the selection step is carried out. This step is undertaken by sorting the CONFIGURATION SCOREs of each assembly configuration such that more satisfied criteria are ranked higher. Then the configurations are ranked by score. The best possible result is all satisfied, with zero score.

The GMD algorithm follows a typical evolutionary algorithm and uses "tournament selection" to select "survivor" assembly configurations that survive to the next generation. A random subset of results are chosen and the best scoring n results survive.

*Other variations*

Any general purpose computer described above may be replaced by a distributed computer system such as a network, or a remote machine.

As described above, the connector information is input manually into the computer. Alternatively, such information may be automatically generated from the CAD model, e.g. by a machine learning agent.

## Claims

1. A computer implemented method of designing an assembly configuration of a plurality of interconnected modules, the method comprising the steps of:

   for a plurality of physical modules each having at least one physical connector, providing module data (100) identifying the module and connector data;
   forming a module-graph (200) comprising, for each module, a module node (1352) comprising the module data and at least one connector node (1354) comprising the connector data, and forming connection edges (1356) between compatible connector nodes of pairs of module nodes;
   creating a module instance graph (MIG) (1370) representative of an assembly configuration of modules, the module instance graph comprising one or more module instances, each module instance relating to one of the plurality of modules;
   querying the module-graph (300) by:

   generating a next module option by identifying available modules based on the connection edges in the module-graph;
   selecting a module for addition to the module instance graph from the available modules;
   adding a module instance to the module instance graph based on the selected module;
   repeating the steps of generating, selecting and adding to generate a completed module instance graph; and,
   generating an assembly configuration (400) based on the completed module instance graph.

2. A method according to claim 1, wherein the connector data comprises orientation data for each connector.

3. A method according to claim 2, comprising the step of:

   providing geometric data for at least two modules in the module-graph;
   checking for module collisions using the orientation data to undertake spatial transformations on the geometric data;
   adding collision rules to the module graph, the collision rules identifying collisions between the at least two modules.

4. A method according to claim 3, wherein modules in breach of a collision rule are excluded from the step of generating a next module option.

5. A method according to any preceding claim, comprising the step of:
   adding composition rule data to the module graph, composition rule data comprising upper and / or lower limits of the number of any module permitted in an assembly configuration.

6. A method according to claim 5, wherein modules in breach of a composition rule are excluded from the step of generating a next module option.

7. A method according to any preceding claim, comprising the step:
   adding direct rules to the module graph, the direct rules comprising data concerning the compatibility of two modules if directly connected.

8. A method according to claim 7, wherein modules in breach of a direct rule are excluded from the step of generating a next module option.

9. A method of generating a plurality of assembly configurations according to a predetermined set of criteria, comprising the steps of:

    generating an initial population of assembly configurations using the method of any preceding claim;
    providing a set of criteria;
    assessing the population against the criteria and selecting assembly configurations that meet, or are closest to meeting, the criteria;
    modifying the selected assembly configurations;
    repeating the above steps to iterate towards a population of assembly configurations that meet the criteria.

10. A method according to claim 9, wherein the step of modifying comprises the step of mutating the selected assembly configurations by undertaking at least one of the functions of:

    rearranging the modules in the module instance graph representing the assembly configuration;
    removing a module from the module instance graph;
    replacing a module from the module instance graph;
    adding a module to the module instance graph; and,
    altering the parameters of a module in the module instance graph.

11. A method according to claim 10, wherein the step of mutation is carried out by randomly selecting at least one function.

12. A method of manufacture of an assembly comprising the steps of:

    carrying out a computer implemented method according to any of claims 1 to 11;
    assembling the modules according to the assembly configuration.

13. A data processing apparatus comprising means for carrying out the method of any preceding claim.

14. A computer program comprising instructions which, when the program is executed by a computer, cause the computer to carry out the method of any preceding claim.

15. A computer-readable storage medium comprising instructions which, when executed by a computer, cause the computer to carry out the method of any preceding claim.

Fig. 1

1000

1002

1006

1004

Fig. 2

1200

1206

1100-A

1100-B

1100-C

1210   1204   1202

1208

Fig. 3

1300

1304-BA

1306-A

1000-A

1000-B

1304-AA

1304-AB

1300-A

1300-B

Fig. 4

1350

1358

1:n

1360-A

1360-B

1360-C

1354-BA

1354-BB

1356-B

1356-E

1356-D

1354-AA

1352-B

1352-A

1354-AB

1356-C

1354-CA

1352-C

1354-CB

1356-A

Fig. 5

1400

1402-A : 1404-AB : 1404-BA : 1402-B : 1404-BB : 1404-CA : 1402-C

Fig. 6

1370

1356-B

1354-AA

1354-BA

1354-BB

1356-E

1352-A

1354-AB

1352-B

1354-CA  1352-C  1354-CB

Fig. 7

300

302

304

306

308

310

312

314

316

318

Fig. 8

1352-B

1354-AB - 1354-BA
w = 2.0

1352-A

1354-BB - 1354-CA
1354-BB – 1354CB
w = 1.333

1354-AA - 1354-CA
w = 2.0

1352-C

Fig. 9

Fig. 10

Fig. 11

1700

Fig. 12a

1702

Fig. 12b

| | Europäisches Patentamt<br>European Patent Office<br>Office européen des brevets | **EUROPEAN SEARCH REPORT** | **Application Number**<br><br>EP 24 22 3656 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDREW KUSIAK ET AL: "Development of Modular Products",<br>IEEE TRANSACTIONS ON COMPONENTS, PACKAGING ANDMANUFACTURING TECHNOLOGY: PART A, IEEE SERVICE CENTER, PISCATAWAY, NJ, US,<br>vol. 19, no. 4,<br>1 December 1996 (1996-12-01), XP011010985,<br>ISSN: 1070-9886<br>* section III.A, III.B;<br>figures 10-12; table I *<br>----- | 1-15 | INV.<br>G06F30/10<br>G06F30/20<br><br>ADD.<br>G06F111/20<br>G06F111/04 |
| A | YAN JIN-TAI: "Bus Assignment Considering Flexible Escape Routing for Layer Minimization in PCB Designs",<br>IEEE TRANSACTIONS ON COMPUTER-AIDED DESIGN OF INTEGRATED CIRCUITS AND SYSTEMS, IEEE, USA,<br>vol. 41, no. 8,<br>14 September 2021 (2021-09-14), pages 2699-2713, XP011914692,<br>ISSN: 0278-0070, DOI:<br>10.1109/TCAD.2021.3112882<br>[retrieved on 2021-09-15]<br>* abstract *<br>* section II, III;<br>figures 2-5, 10, 11 *<br>----- | 1-15 | |
| A | US 2009/073160 A1 (WONG SHING YUE SAMUEL [HK] ET AL) 19 March 2009 (2009-03-19)<br>* abstract *<br>* [0003], [0013];<br>claim 1; figures 1, 5 *<br>----- | 1-15 | TECHNICAL FIELDS SEARCHED (IPC)<br><br>G06F |

The present search report has been drawn up for all claims

| Place of search | Date of completion of the search | Examiner |
|---|---|---|
| Munich | 10 June 2025 | Brandiska, Pavlina |

EPO FORM 1503 03.82 (P4C01)

## ANNEX TO THE EUROPEAN SEARCH REPORT
## ON EUROPEAN PATENT APPLICATION NO.

EP 24 22 3656

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | Publication date |
|---|---|---|---|
| US 2009073160 A1 | 19-03-2009 | NONE | |

EPO FORM P0459

For more details about this annex : see Official Journal of the European Patent Office, No. 12/82